# EUROPÄISCHE PATENTSCHRIFT

(11) **EP 1 437 668 B1**
(45) Veröffentlichungstag und Bekanntmachung des Hinweises auf die Patenterteilung: **15.11.2006**
(21) Anmeldenummer: 03000262.0
(22) Anmeldetag: 08.01.2003
(51) Int. Cl.: G06Q 20/00

(54) **Verfahren zur bargeldlosen Zahlung von Waren oder Dienstleistungen unter Verwendung eines Mobilfunkendgerätes**
Method for conducting a cashless payment of goods or services using a mobile radio terminal
Procédé pour le paiement de marchandises ou de services sans argent liquide au moyen d'un terminal radio mobile

(43) Veröffentlichungstag der Anmeldung: 14.07.2004
(73) Patentinhaber: Krause, Rolf, 47877 Willich (DE)
(72) Erfinder: Krause, Rolf, 47877 Willich (DE)
(74) Vertreter: Stenger, Watzke & Ring

(56) Entgegenhaltungen:
- EP-A- 0 068 805
- EP-A- 1 235 407
- WO-A-01/37594
- WO-A-01/86515
- WO-A-81/02655
- WO-A-98/34203
- WO-A-98/42173
- US-A1- 2002 058 494
- US-A1- 2002 087 894
- US-A1- 2002 147 690

## Beschreibung

Die vorliegende Erfindung betrifft ein Verfahren zur bargeldlosen Zahlung von Waren oder Dienstleistungen unter Nutzung eines Mobilfunkendgerätes und Einsatz wenigstens einer Zentralrechnereinheit, bei welcher ein Nutzer registriert ist, wobei mit dem Mobilfunkendgerät von der Zentralrechnereinheit eine Transaktions-ID eingeholt wird und an einen Dienstleister/Warenanbieter übertragen wird und Transaktionsinformationen an die Zentralrechnereinheit übermittelt werden.

Verfahren zur bargeldlosen Zahlung von Waren oder Dienstleistungen unter Nutzung eines Mobilfunkendgerätes sind umfangreich im Einsatz, beispielsweise bei der Durchführung von Automatennutzungsvorgängen. Bei solchen Nutzungsvorgängen wird mit einer im Bereich des Automaten befindlichen Telefonnummer eine Zentralrechnereinheit angewählt, mit einem Mobilfunkendgerät von der Zentralrechnereinheit ein Abwicklungscode empfangen und an den Automaten weitergegeben. Der im Automaten befindliche Rechner ist nun in der Lage, anhand des Abwicklungscodes nutzungsbezogene Informationen zu ermitteln und den Automaten für eine bestimmte Nutzungsart freizugeben. Der Nutzer kann nun die gewünschte Nutzungsberechtigung einlösen. In der Zentralrechnereinheit wird die Rufnummer des Mobilfunkendgerätes den ihr gesendeten Abwicklungscodes zugeordnet und gespeichert. Im Automaten werden Informationen gespeichert, die den eingegebenen Code einerseits und die durchgeführte Nutzung andererseits umfassen. Durch Vergleich dieser Daten kann ein Inkassovorgang durchgeführt werden, beispielsweise kann eine Abwicklung über die Telefonrechnung erfolgen. Unter einem Automaten werden hier auch Einrichtungen zur Durchführung automatisierter Zahlungsvorgänge, wie zum Beispiel Geldautomaten und Zahlungsterminals, verstanden.

Weiterhin bekannt sind bargeldlose Zahlungsmöglichkeiten zum Beispiel über Anbieter wie "paybox" oder "max-shopping". Bei diesen Verfahren ist Voraussetzung, dass der Nutzer zu Beginn bei dem jeweiligen Anbieter registriert worden ist. Die Anbieter ermöglichen Nutzern dann zum Beispiel, per Email eine Transaktionsanfrage an einen Dienstleister/Warenlieferer zu übermitteln. Der Dienstleister/Warenlieferer übermittelt die Transaktionsdaten an eine zentrale Rechnereinheit des Verfahrensanbieters. Der Nutzer erhält vom Verfahrensanbieter einen Anruf, durch den ihm die von der Rechnereinheit empfangenen Transaktionsdaten übermittelt werden, die er durch Eingabe einer PIN bestätigen und freigeben kann. Alternativ kann der Nutzer mit seinem Mobilfunkendgerät durch Anwahl einer bestimmten Telefonnummer Kontakt mit der zentralen Rechnereinheit aufnehmen, eine den Dienstleister/Warenlieferer der Transaktion identifizierende Nummer zusammen mit dem zu zahlenden Betrag eingeben und die Transaktion mit einer PIN freigeben. Bei dieser Variante muss allerdings auch der Dienstleister/Warenlieferer beim jeweiligen Anbieter registriert sein. In beiden Varianten führt der Verfahrensanbieter die Abrechnung über "prepaid-Guthaben" oder Lastschrifteinzug über das Girokonto des Nutzers durch.

Bei diesen Verfahren erfolgt keine autentifizierende Identifikation der Teilnehmer, beispielsweise durch einen Ausweis. Es existieren keine elektronischen Verfahrensmerkmale, die bei Durchführen einer Transaktion die Autenzität und Integrität der Transaktionsanweisung und des Nutzers garantieren.

Weiterhin bestehen Systeme zum Kauf eines Fahrscheins, wie zum Beispiel das "mobile ticketing system". Bei diesem System muss der Nutzer ein bestimmtes Mobilfunknetzwerk nutzen und Mitglied beim Verfahrensbetreiber sein, er sendet eine SMS an den Betreiber, aus der dieser den Nutzungswunsch, hier den Kauf eines Fahrscheins, erkennen kann. Der Betreiber sendet den Fahrschein ebenfalls als SMS und rechnet über die Telefonrechnung des Nutzers ab. Nachteilig bei diesem System ist die Abhängigkeit vom Netzwerkbetreiber und die fehlende Möglichkeit der sicheren Übertragung sensibler Daten.

Die WO 01/86515 A1 beschreibt ein Transaktionsverfahren zwischen einem Kunden und einem von einer Vielzahl von Dienstterminals, welche Dienstterminals durch Kunden selektierbare, kostenpflichtige Produkte und/oder Dienstleistungen vor Ort liefern, wobei mittels eines tragbaren Mobilgeräts des Kunden ein Anforderungsbeleg, der eine Dienstterminalidentifizierung des Dienstterminals umfaßt, über ein Mobilfunknetz an eine Dienstzentrale übermittelt wird, die Dienstzentrale die Kreditwürdigkeit des Kunden überprüft, von dem der Anforderungsbeleg übermittelt wurde, und bei positiver Kreditwürdigkeit einen Kreditbeleg, der mindestens einen Kreditwert umfaßt, über ein Kornmunikationsnetz an das durch die Dienstterminalindentifizierung bestimmte Dienstterminal übermittelt, das Dienstterminal aufgrund des empfangenen Kreditbelegs die Selektion wenigstens eines der Produkte und/oder mindestens einer der Dienstleistungen freigibt und entsprechend der vom Kunden getätigten Selektion das gewünschte Produkt oder die gewünschte Dienstleistung ausliefert und eine Auslieferungsbestätigung, die einen Kostenbetrag des ausgelieferten Produktes oder der ausgelieferten Dienstleistung umfaßt, an die Dienstzentrale übermittelt, und die Dienstzentrale den Kostenbetrag des ausgelieferten Produkts oder der ausgelieferten Dienstleistung dem Kunden verrechnet. Der Kunde wird dabei beispielsweise anhand der auf der SIM-Karte gespeicherten International Mobile Subscriber Identity (IMSI) identifiziert, so daß seine Kreditwürdigkeit überprüft werden kann. Auf diese Weise werden nicht kreditwürdige Kunden von Transaktionen ausgeschlossen, was insbesondere für den Betreiber der Dienstterminals vorteilhaft ist. Kundenseitig bestehen hingegen einige Nachteile. Aufgrund der Kundenidentifizierung anhand der auf der SIM-Karte gespeicherten Daten besteht die Möglichkeit, daß Transaktionen im Namen des Kunden basierend auf gefälschten SIM-Karten durchgeführt werden. Ferner besteht für den Kunden keine Möglichkeit, Einfluß auf den Kreditwert des Kreditbeleges zu nehmen. Er kann daher nicht sichergehen, daß ihm nicht mehr als der tatsächliche Betrag in Rechnung gestellt wird. Kundenseitig bestehen demnach erhebliche Sicherheitsmängel.

Die WO 98/42173 beschreibt ein Verfahren zur Inanspruchnahme von Bankdienstleistungen, bei dem unter Verwendung eines Mobilfunkendgerätes eines Nutzers bidirektional Daten zwischen dem Mobilfunkendgerät und einem Bankserver via SMS versendet werden.

Ausgehend vom beschriebenen Stand der Technik liegt daher der Erfindung die **Aufgabe** zugrunde, ein Verfahren zur bargeldlosen Zahlung mit einem Mobilfunkendgerät bereitzustellen, das von Netzwerkvertreibern, Handy- und SIM-Kartenherstellern unabhängig ist, mit dem in einem einzigen Betätigungsansatz unterschiedliche Kaufarten durchgeführt werden können und das eine hohe Sicherheit gegen Manipulation und unberechtigten Gebrauch bietet.

Zur technischen **Lösung** dieser Aufgabe wird mit der Erfindung ein Verfahren nach Anspruch 1 vorgeschlagen.

Erfindungsgemäß können mit beliebigen Mobilfunkendgeräten unabhängig vom Netzwerkbetreiber und SIM-Kartenhersteller Transaktionen durchgeführt werden. Der mit dem Verfahren gewährte Sicherheitsstandart ist hoch, so dass auch eine Übertragung von sensiblen Daten ohne Bedenken möglich ist. Das Mobilfunkendgerät eines möglichen Nutzers des Verfahrens wird zentral registriert. Dazu wird ein das Mobilfunkendgerät identifizierender und Nutzerinformationen aufweisender Datensatz erstellt, verschlüsselt und als Registrierungsdatensatz in der Zentralrechnereinheit und im Mobilfunkendgerät gespeichert. Wenn der Nutzer eine Transaktion durchführen will, so ruft er an seinem Mobilfunkendgerät eine Applikation auf und fordert von einer Zentralrechnereinheit eine Transaktions-ID an. Zusammen mit dieser Anfrage wird der Registrierungsdatensatz an die Zentralrechnereinheit geleitet. Die Zentralrechnereinheit entschlüsselt und überprüft den Registrierungsdatensatz und sendet bei korrektem Registrierungsdatensatz die Transaktions-ID an das Mobilfunkendgerät des Nutzers. Um die Zeit des Transaktionsablaufs zu sparen, kann die Nutzeridentifizierung nach der Übertragung der Transaktions-ID (zum Mobilfunkendgerät) vorgenommen werden. Nutzerseitig wird die Transaktions-ID an einen Dienstleister/Warenlieferer weitergeleitet. Der Dienstleister/Warenlieferer übermittelt diese Transaktions-ID zusammen mit Transaktionsinformationen und dem zu zahlenden Betrag an die Zentralrechnereinheit. In der Zentralrechnereinheit wird die vom Dienstleister/Warenlieferer erhaltene Transaktions-ID überprüft. Bei Übereinstimmung werden die Transaktionsinformationen und der zu zahlende Betrag an den Nutzer weitergeleitet, der seinerseits eine Kaufbestätigung an die Zentralrechnereinheit sendet. Die Zentralrechnereinheit wiederum veranlaßt die Abwicklung des Zahlungsvorganges bei einer Zahlungsrechnereinheit und erhält von dieser eine Bestätigung. Daraufhin wird eine Kaufbestätigung an den Nutzer und an den Dienstleister/Warenlieferer übermittelt.

Aufgrund der Identifizierung des Nutzers durch den Registrierungsdatensatz seines Mobilfunkendgerätes in der Zentralrechnereinheit und der Verschlüsselung aller übertragenen Daten ist das erfindungsgemäße Verfahren sicher vor Zugriffen und Manipulationen Dritter. Durch die Möglichkeit einer sicheren Übermittlung sensibler Daten, wie zum Beispiel Bankverbindungen, und eine Entkopplung des eigentlichen Zahlungsvorgangs von der Transaktionsanweisung, wird eine Nutzung des Verfahrens auch mit Dienstleistern/Warenlieferern, die nicht beim Verfahrensbetreiber registriert sind, ermöglicht. Auch werden unterschiedliche Kaufarten mit einem Verfahren abgedeckt.

Gemäß einem weiteren Vorschlag der Erfindung weist die Grundregistrierung verschlüsselte Daten eines Ausweises des Nutzers, zum Beispiel des Personalausweises, eine Mobilfunkrufnummer und Daten von Konten des Nutzers auf. Mit Hilfe der Daten des Ausweises des Nutzers kann dessen Identität schon bei seiner Registrierung autentifiziert werden. Durch die Verwendung dieser Daten zum Erzeugen des Registrierungsdatensatzes werden der Zentralrechnereinheit sofort zu Beginn einer Transaktion die für die Transaktion notwendigen Daten zur Verfügung gestellt. Das Verfahren ist nutzerfreundlich, da der Nutzer keine weiteren Daten eingeben muss.

Nach einem weiteren Vorschlag der Erfindung übermittelt der Dienstleister/Warenlieferer die Transaktions-ID zusammen mit Verkaufsinformationsdaten direkt an die Zahlungsrechnereinheit, die die Transaktionsdaten an die Zentralrechnereinheit weiterleitet und nach deren Bestätigung die Transaktion abschließt. Durch diese Vorgehensweise wird beispielsweise beim Durchführen von Überweisungen der Datenfluß auf das notwendige Minimum reduziert und der gesamte Vorgang einfacher und nutzerfreundlicher.

Nach einem weiteren Vorschlag der Erfindung erfolgt die Datenübermittlung per HTTPS. Durch die Datenübertragung mit Hilfe dieses sicheren Protokolls wird die Sicherheit des Verfahrens zusätzlich erhöht. Weiterhin kann vorgesehen sein, dass die Verschlüsselung nach dem Triple Desc Verfahren erfolgt. Durch dieses derzeit sicherste Verschlüsselungsverfahren wird, ebenso wie durch die Verwendung digitaler Signaturen, die Sicherheit des Verfahrens erhöht.

Nach einem weiteren Vorschlag der Erfindung wird zur Abwicklung einer Transaktion die Eingabe einer PIN vorgesehen. Dadurch wird verhindert, dass, falls ein Unbefugter in den Besitz eines eingeschalteten Mobilfunkendgerätes kommen sollte, er mit diesem Transaktionen durchführen kann. Die Eingabe einer zusätzlichen PIN dient somit einer weiteren Erhöhung der Sicherheit des Verfahrens und stellt ein Instrument zur Verfügung, mit dem der Nutzer unabhängig vom Verfahren und der digitalen Übertragung von Daten einen unberechtigten Zugriff auf seine Daten und unberechtigte Transaktionen verhindern kann. Durch einen Wechsel der PIN kann diese Sicherheit noch gesteigert werden. Eine zusätzliche Sicherheit kann durch eine Begrenzung der Höhe der verfügbaren Beträge erreicht werden.

Weiterhin kann vorteilhaft vorgesehen sein, dass in den Daten der Grundregistrierung die Daten mehrerer Konten enthalten sind, wobei das bei einer Nutzung verwendete Konto zu Beginn jedes Nutzungsvorganges ausgewählt wird. Dadurch wird die Flexibilität des Verfahrens für den Nutzer erhöht und die Nutzerfreundlichkeit gesteigert. Der Nutzer kann mit einer Grundregistrierung auf mehrere Konten zugreifen. Es kann daher seine gesamten Bankgeschäfte, wie zum Beispiel Überweisungen von einem Konto auf ein anderes, Einrichtung vom Daueraufträgen und Abfragen seiner Kontostände mit Hilfe seines Mobilfunkendgerätes durchführen.

Nach einer weiteren vorteilhaften Ausführungsform der Erfindung ist der Zeitraum, in der eine Transaktions-ID in der Zentralrecheneinheit einem Mobilfunkendgerät zugeordnet ist, beispielsweise nicht länger als 5 Minuten nach der Anfrage der Transaktions-ID. Nach dieser Zeit wird dieselbe Transaktions-ID einem anderen Mobilfunkendgerät zugeordnet. Auf diese Weise verringert sich die Anzahl der von der Zentralrecheneinheit in einem bestimmten Zeitraum ausgegebenen Transaktions-ID's und die benötigte Speicher- und Rechenleistung der Zentralrecheneinheit wird minimiert.

Nach einer weiteren vorteilhaften Ausführungsform der Erfindung bestimmt der Nutzer das Sicherheitsniveau einer Transaktion durch eine Auswahl von Sicherheitskriterien. Er bestimmt dabei beispielsweise in der Registrierung, dass zum Applikationsaufruf oder beim Überschreiten eines bestimmten Transaktionsbetrags die Eingabe einer PIN erforderlich ist oder dass zur Bestätigung einer Transaktion die Eingabe eines Passwortes erforderlich ist.

Weitere Vorteile und Merkmale der Erfindung ergeben sich aus der folgenden Beschreibung anhand der Fig. 1 bis Fig. 5. Die in den Figuren beschriebenen Ausführungsbeispiele dienen nur der Erläuterung und sind nicht beschränkend.
Dabei zeigt:
- Fig. 1: eine schematische Darstellung eines Ablaufdiagramms für die Registrierung eines Nutzers in einer Zentralrechnereinheit,
- Fig. 2: eine schematische Darstellung eines Ablaufdiagramms für eine Transaktion mit Hilfe eines Mobilfunkendgerätes an ein Zahlungsterminal,
- Fig. 3: eine schematische Darstellung eines Ablaufdiagramms für eine Transaktion mit Hilfe eines Mobilfunkendgerätes an ein weiteres Mobilfunkendgerät
- Fig. 4: eine schematische Darstellung eines Ablaufdiagramms für eine Transaktion mit Hilfe eines Mobilfunkendgerätes zu einem Dienstleister/Warenlieferer über das Internet,
- Fig. 5: eine schematische Darstellung eines Ablaufdiagramms für eine Überweisung mit Hilfe eines Mobilfunkendgerätes.

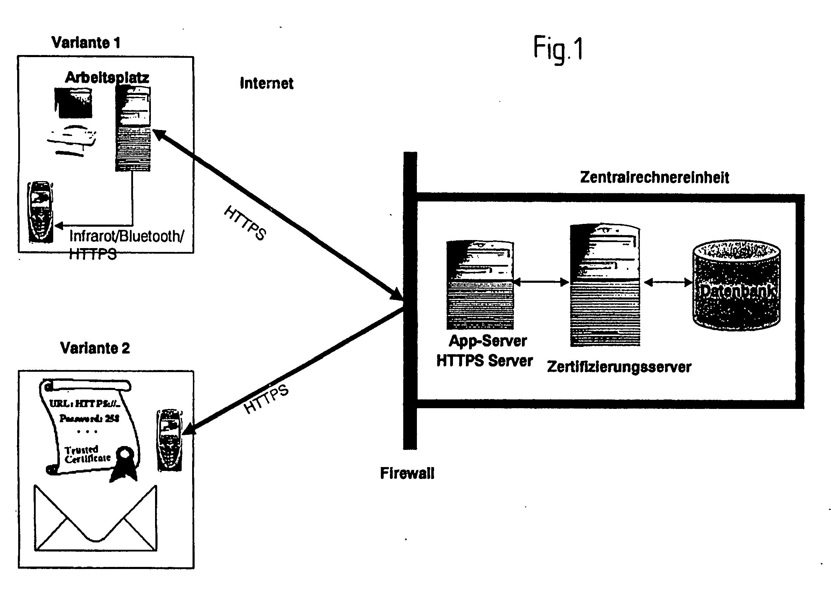

In Fig. 1 ist der Ablauf der Registrierung eines Nutzers schematisch dargestellt. Der Nutzer kann an einer Rechnereinheit über eine sichere Internetverbindung, beispielsweise HTTPS, auf einer Homepage eines Anbieters die zur Registrierung erforderlichen Daten, wie zum Beispiel seine Personalausweisnummer, seine Mobilfunkrufnummer und seine Bankverbindungsdaten, eingeben und an eine Zentralrechnereinheit übermitteln. Die Zentralrechnereinheit besteht beispielsweise aus einer Datenbank, einem Zertifizierungsserver und einem App/HTTP-Server und ist mit einer Firewall vor Angriffen Unberechtigter geschützt. In der Zentralrechnereinheit wird aus den übermittelten Daten ein Registrierungsdatensatz erstellt, mit einem Schlüssel codiert und entweder per Email zusammen mit dem Schlüssel an die Rechnereinheit des Nutzers oder ohne Schlüssel an dessen Mobilfunkendgerät geleitet. Im ersten Fall werden die Registrierungsdaten zum Beispiel mit Hilfe einer lokalen Schnittstelle an das Mobilfunkendgerät des Nutzers übermittelt, im zweiten Fall wird dem Nutzer ermöglicht, seine Registrierung freizuschalten, indem er zum Beispiel einen auf dem Postweg zugestellten Schlüssel in sein Mobilfunkendgerät eingibt.

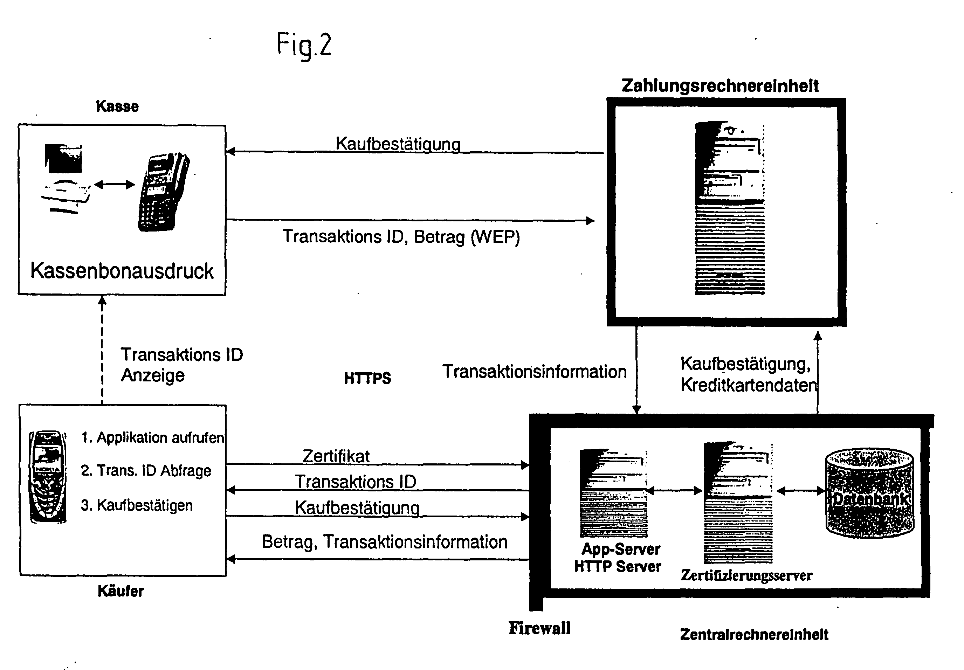

In Fig. 2 erkennt man eine schematische Darstellung eines Ablaufdiagramms für eine Transaktion mit Hilfe eines Mobilfunkendgerätes an ein Zahlungsterminal. Will ein Nutzer eine Transaktion durchführen, so ruft er an seinem Mobilfunkendgerät eine Applikation auf und fordert von einer Zentralrechnereinheit eine Transaktions-ID an. Zusammen mit dieser Anfrage wird der Registrierungsdatensatz in Form eines Zertifikates an die Zentralrechnereinheit geleitet. Die Zentralrechnereinheit entschlüsselt und überprüft das Zertifikat und sendet bei korrekter Zertifizierung eine Transaktions-ID an das Mobilfunkendgerät des Nutzers. Die Transaktions-ID besteht beispielsweise aus einer kurzen Zeichenkette, beispielsweise vier Symbolen, die für einen kurzen Zeitraum gut zu merken sind (zum Beispiel: 9999, 123, 22, AAAA, ...). Die Darstellung der Transaktions-ID in der Applikation weist eine minimale Schriftzeichenhöhe von beispielsweise 10mm auf, so dass sie für den Nutzer gut lesbar ist.

Nutzerseitig wird die Transaktions-ID an ein Zahlungsterminal weitergeleitet. Die Art dieser Übermittlung ist in der Fig. 2 nicht näher dargestellt und ist von der Darstellung der Transaktions-ID durch das Mobilfunkendgerät abhängig. Die Übermittlung kann beispielsweise über eine lokale Schnittstelle, wie Bluetooth oder eine Infrarotschnittstelle, oder durch die Eingabe einer Zahlenfolge mit Hilfe einer am Terminal vorhandenen Tastatur erfolgen. Das Terminal übermittelt diese Transaktions-ID zusammen mit Transaktionsinformationen und dem zu zahlenden Betrag an eine Zahlungsrechnereinheit. Diese übermittelt die Transaktionsinformationen an die Zentralrechnereinheit, die die erhaltenen Transaktionsinformationen überprüft und bei Übereinstimmung an den Nutzer weiterleitet. Der Nutzer übermittelt daraufhin seinerseits eine Kaufbestätigung an die Zentralrechnereinheit, die diese zusammen mit den Bankverbindungsdaten des Nutzers an die Zahlungsrechnereinheit weitergibt. Die Zahlungsrechnereinheit veranlaßt die Abwicklung des Zahlungsvorganges und sendet eine Bestätigung an das Zahlungsterminal.

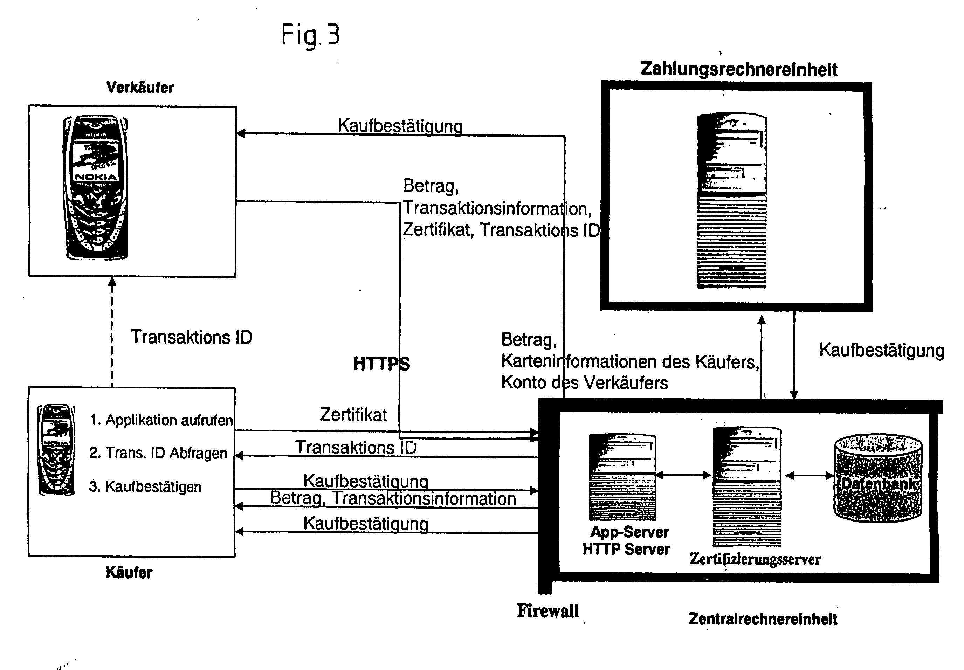

In Fig. 3 erkennt man eine schematische Darstellung eines Ablaufdiagramms für eine Transaktion mit Hilfe eines Mobilfunkendgerätes über ein weiteres Mobilfunkendgerät. Wenn ein Nutzer eine Transaktion durchführen will, so ruft er an seinem Mobilfunkendgerät eine Applikation auf. Die Anforderung und Übermittlung der Transaktions-ID verlaufen wie in Fig. 2 beschrieben. Nutzerseitig wird die Transaktions-ID an ein Mobilfunkendgerät eines Dienstleisters/Warenlieferers weitergeleitet. Das kann zum Beispiel per SMS oder einen Anruf erfolgen. Der Dienstleister/Warenlieferer ist wie der Nutzer in der Zentralrechnereinheit registriert und übermittelt die Transaktions-ID zusammen mit Transaktionsinformationen, dem zu zahlenden Betrag und seinem Registrierungsdatensatz an die Zentralrechnereinheit. In der Zentralrechnereinheit werden die vom Dienstleister/Warenlieferer erhaltenen Daten überprüft. Bei Übereinstimmung werden die Transaktionsinformationen und der zu zahlende Betrag an den Nutzer weitergeleitet, der seinerseits eine Kaufbestätigung an die Zentralrechnereinheit sendet. Die Zentralrechnereinheit wiederum veranlaßt die Abwicklung des Zahlungsvorganges bei einer Zahlungsrechnereinheit und erhält von dieser eine Bestätigung. Daraufhin wird eine Kaufbestätigung an den Nutzer und den Dienstleister/Warenlieferer übermittelt.

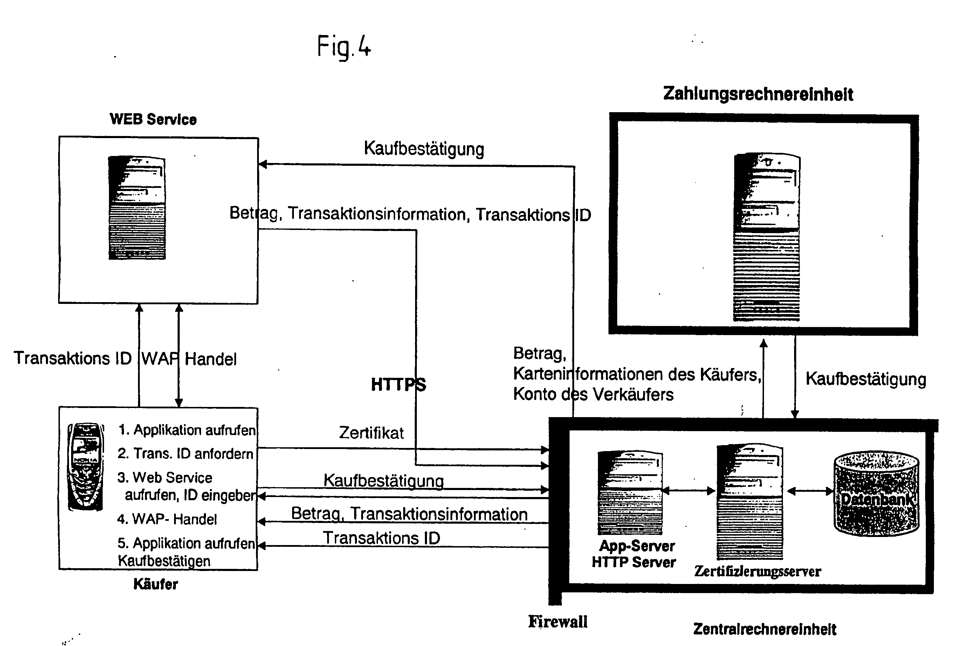

In Fig. 4 erkennt man eine schematische Darstellung eines Ablaufdiagramms für eine Transaktion mit Hilfe eines Mobilfunkendgerätes zu einem Dienstleister/Warenlieferer über das Internet. Der Ablauf entspricht im wesentlichen dem in Fig. 3 beschriebenen, anstelle des Mobilfunkendgerätes des Dienstleisters/Warenlieferers befindet sich hier eine Rechnereinheit eines Webservices, der im Gegensatz zum Mobilfunkendgerät des Dienstleisters/Warenlieferers nicht durch eine Registrierung identifiziert werden muss.

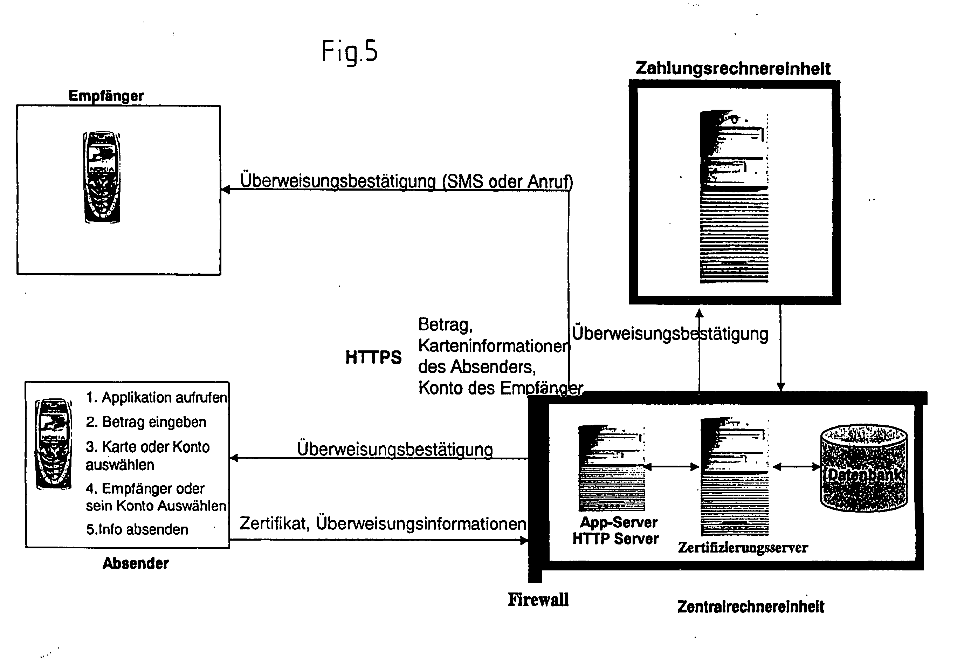

In Fig. 5 erkennt man eine schematische Darstellung eines Ablaufdiagramms für eine Überweisung mit Hilfe eines Mobilfunkendgerätes. Wenn ein Nutzer eine Überweisung durchführen will, ruft er an seinem Mobilfunkendgerät eine Applikation auf. Er gibt den zu überweisenden Betrag, das Konto, von dem der Betrag überwiesen werden soll und den Empfänger der Überweisung oder dessen Konto in sein Mobilfunkendgerät ein. Zusammen mit den Überweisungsdaten wird die Registrierung als Registrierungsdatensatz an die Zentralrechnereinheit übermittelt. Die Zentralrechnereinheit entschlüsselt und überprüft das Zertifikat und übermittelt bei korrekter Zertifizierung die Überweisungsinformationen an eine Zahlungsrechnereinheit. Die Zahlungsrechnereinheit führt die finanzielle Transaktion durch und übermittelt eine Bestätigung an die Zentralrechnereinheit, die eine Überweisungsbestätigung an den Nutzer und den Empfänger der Überweisung übermittelt.

## Patentansprüche

1. Verfahren zur bargeldlosen Zahlung von Waren oder Dienstleistungen unter Nutzung eines Mobilfunkendgerätes und Einsatz wenigstens einer Zentralrechnereinheit eines Verfahrensanbieters, bei welcher ein Nutzer registriert ist, wobei mit dem Mobilfunkendgerät von der Zentralrechnereinheit eine Transaktions-ID eingeholt wird und an einen Dienstieister/Warenanbieter übertragen wird und Transaktionsinformationen an die Zentralrechnereinheit übermittelt werden,
**dadurch gekennzeichnet, dass**
zur Registrierung des Nutzers beim Verfahrensanbieter eine Grundregistrierung des Nutzers beim Verfahrensanbieter erfolgt, bei der Zentralrechnereinheit eine als Grundregistrierung dienender, das Mobilfunkendgerät identifizierender und Nutzerinformationen aufweisender Datensatz erstellt und mit einem Schlüssel verschlüsselt wird,
der verschlüsselte Datensatz als Registrierungsdatensatz und der Schlüssel an den Nutzer übermittelt werden,
der verschlüsselte Datensatz in der Zentralrechnereinheit des Verfahrensanbieters und im Mobilfunkendgerät des Nutzers gespeichert wird,
der Nutzer seine Registrierung mit dem Schlüssel am Mobilfunkendgerät freischaltet,
bei nutzerseitiger Abfrage einer Transaktions-ID dieser Registrierungsdatensatz vom Mobilfunkendgerät zur Zentralrechnereinheit übermittelt, und dort entschlüsselt und überprüft wird eine Transaktions-ID von des Zentralrechnereinheit an das Mobilfunkendgerät übermittelt wird,
die Transaktions-ID vom Nutzer an den Dienstleister/Warenanbieter weitergeleitet wird,
der Dienstleister/Warenanbieter die Transaktions-ID zusammen mit Transaktionsinformationen an die Zentralrechnereinheit übermittelt, wo die Transaktions-ID überprüft wird,
von der Zentralrechnereinheit eine nutzerseitige Bestätigung eingeholt wird, eine Übermittlung an eine zentrale Zahlungsrechnereinheit stattfindet, diese eine Zahlungsabwicklung durchführt und
durch die Zentralrechnereinheit eine Kaufbestätigung übermittelt wird.

2. Verfahren nach Anspruch 1, **dadurch gekennzeichnet, dass** für die Grundregistrierung verschlüsselte Daten eines Ausweises eines Nutzers, eine Mobilfunkrufnummer und Daten von Konten des Nutzers verwendet werden.

3. Verfahren nach einem der vorstehenden Ansprüche, **dadurch gekennzeichnet, dass** der Dienstleister/Warenlieferer die Transaktions-ID zusammen mit Verkaufsinformationsdaten direkt an die Zahlungsrechnereinheit übermittelt, diese die Transaktionsdaten an die Zentralrechnereinheit weiterleitet und nach deren Bestätigung die Transaktion abgeschlossen wird.

4. Verfahren nach einem der vorstehenden Ansprüche, **dadurch gekennzeichnet, dass** die Datenübermittlung per HTTPS erfolgt.

5. Verfahren nach einem der vorstehenden Ansprüche, **dadurch gekennzeichnet, dass** die Verschlüsselung nach dem Triple Desc Verfahren erfolgt.

6. Verfahren nach einem der vorstehenden Ansprüche, **dadurch gekennzeichnet, dass** bei der Verschlüsselung digitale Signaturen verwendet werden.

7. Verfahren nach einem der vorstehenden Ansprüche, **dadurch gekennzeichnet, dass** zur Abwicklung einer Transaktion die Eingabe einer PIN vorgesehen wird.

8. Verfahren nach einem der vorstehenden Ansprüche, **dadurch gekennzeichnet, dass** in den Daten der Grundregistrierung die Daten mehrerer Konten enthalten sind, wobei das bei einer Nutzung verwendete Konto zu Beginn jedes Nutzungsvorganges ausgewählt wird.

9. Verfahren nach einem der vorstehenden Ansprüche, **dadurch gekennzeichnet, dass** die Höhe der verfügbaren Beträge begrenzt wird.

10. Verfahren nach einem der vorstehenden Ansprüche, **dadurch gekennzeichnet, dass** der Zeitraum, in der eine Transaktions-ID in der Zentralrecheneinheit einem Mobilfunkendgerät zugeordnet ist, begrenzt ist.

11. Verfahren nach einem der vorstehenden Ansprüche, **dadurch gekennzeichnet, dass** der Nutzer das Sicherheitsniveau einer Transaktion durch eine Auswahl von Sicherheitskriterien bestimmt.

## Claims

1. A method of cashless payment for goods or services using a mobile radio terminal and using at least one central computer unit of a service provider with which a user is registered, wherein a transaction ID is obtained with the mobile radio terminal from the central computer unit and transmitted to an offer/or of services/goods and transaction information is transmitted to the central computer unit, **characterised in that** in order to register the user with the service provider a basic registration of the user with the service provider occurs in which a record is produced in the central computer, which serves as the basic registration and identifies the mobile radio terminal and includes user information and is encrypted with a data key, the encrypted record constituting a registration record and the data key are transmitted to the user, the encrypted record is stored in the central computer unit of the service provider and in the mobile terminal of the user, the user clears his registration with the data key at the mobile radio terminal, if the user should request a transaction ID, this registration record is transmitted from the mobile radio terminal to the central computer unit and is there decrypted and checked, a transaction ID is transmitted from the central computer unit to the mobile radio terminal, the transaction ID is transmitted on from the user to the offer/or of the services/goods, the offer/or of the services/goods transmits the transaction ID together with the transaction information to the central computer unit, where the transaction ID is checked, confirmation from the user is obtained from the central computer unit, a transmission occurs to a central payment computer unit, the latter performs a payment settlement and a purchase confirmation is transmitted by the central computer unit.

2. A method as claimed in claim 1, **characterised in that** for the basic registration, encrypted data relating to proof of identity of the user, a mobile radio call number and data relating to accounts of the user are used.

3. A method as claimed in one of the preceding claims, **characterised in that** the supplier of the services/goods transmits the transaction ID together with the purchase information data directly to the payment computer unit and the latter forwards on the transaction data to the central computer unit and after confirmation thereof the transaction is completed.

4. A method as claimed in one of the preceding claims, **characterised in that** the data transmission is effected by HTTPS.

5. A method as claimed in one of the preceding claims, **characterised in that** the encryption is effected by the Triple DES method.

6. A method as claimed in one of the preceding claims, **characterised in that** digital signatures are used in the encryption.

7. A method as claimed in one of the preceding claims, **characterised in that** the input of a PIN is provided for the performance of a transaction.

8. A method as claimed in one of the preceding claims, **characterised in that** the data relating to a number of accounts are included in the data of the basic registration, whereby the account used when utilising the method is selected at the beginning of each utilisation process.

9. A method as claimed in one of the preceding claims, **characterised in that** the magnitude of the sums available is limited.

10. A method as claimed in one of the preceding claims, **characterised in that** the period of time in which a transaction ID is associated with a mobile radio terminal in the central computer unit is limited.

11. A method as claimed in one of the preceding claims, **characterised in that** the user determines the security level of a transaction by selecting security criteria.

## Revendications

1. Procédé pour le paiement de marchandises ou de services sans argent liquide au moyen d'un terminal de radiotéléphonie mobile en utilisant au moins une unité centrale d'ordinateur d'un prestataire de procédé dans laquelle un utilisateur est enregistré, dans lequel le terminal de radiotéléphonie mobile demande à l'unité centrale d'ordinateur un identifiant de transaction et transmet celui-ci à un prestataire de services ou vendeur de marchandises et envoie des informations sur la transaction à l'unité centrale d'ordinateur,
**caractérisé en ce que**
pour l'enregistrement de l'utilisateur chez le prestataire de procédé, un enregistrement principal de l'utilisateur est effectué chez le prestataire de procédé, lors duquel l'ordinateur central crée un ensemble de données servant à l'enregistrement principal, identifiant le terminal de radiotéléphonie mobile et contenant des informations sur l'utilisateur et le code avec une clé,
l'ensemble de données codé servant d'ensemble de données d'enregistrement et la clé sont transmis à l'utilisateur,
l'ensemble de données codé est enregistré dans l'unité centrale d'ordinateur du prestataire de procédé et dans le terminal de radiotéléphonie mobile de l'utilisateur,
l'utilisateur valide son enregistrement avec la clé sur l'appareil de radiotéléphonie mobile, lors de la demande d'un identifiant de transaction par l'utilisateur, cet ensemble de données d'enregistrement est transmis par le terminal de radiotéléphonie mobile à l'unité centrale d'ordinateur et décodé et contrôlé par celle-ci,
un identifiant de transaction est transmis par l'unité centrale d'ordinateur au terminal de radiotéléphonie mobile,
l'identifiant de transaction est transmis par l'utilisateur au prestataire de services ou vendeur de marchandises,
le prestataire de services ou vendeur de marchandises transmet l'identifiant de transaction avec les informations sur la transaction à l'unité centrale d'ordinateur, qui vérifie l'identifiant de transaction,
l'unité centrale d'ordinateur demande une confirmation à l'utilisateur, une transmission est établie avec une unité centrale d'ordinateur de paiement et celle-ci exécute une opération de paiement et
l'unité centrale d'ordinateur transmet une confirmation d'achat.

2. Procédé selon la revendication 1, **caractérisé en ce que** des données codées d'une carte d'identité de l'utilisateur, d'un numéro de téléphonie mobile et des données concernant les comptes de l'utilisateur sont utilisées pour l'enregistrement principal.

3. Procédé selon l'une quelconque des revendications précédentes, **caractérisé en ce que** le prestataire de services ou vendeur de marchandises transmet directement l'identifiant de transaction avec les données d'information sur la vente à l'unité centrale d'ordinateur de paiement, celui-ci transmet les données de transaction à l'unité centrale d'ordinateur et la transaction est conclue après la confirmation de cette dernière.

4. Procédé selon l'une quelconque des revendications précédentes, **caractérisé en ce que** la transmission de données s'effectue par HTTPS.

5. Procédé selon l'une quelconque des revendications précédentes, **caractérisé en ce que** le codage est effectué selon le procédé Triple Desc.

6. Procédé selon l'une quelconque des revendications précédentes, **caractérisé en ce que** des signatures numériques sont utilisées lors du codage.

7. Procédé selon l'une quelconque des revendications précédentes, **caractérisé en ce que** la saisie d'un code confidentiel est prévue pour l'exécution d'une transaction.

8. Procédé selon l'une quelconque des revendications précédentes, **caractérisé en ce que** les données de l'enregistrement principal contiennent les données de plusieurs comptes, le compte employé lors d'une utilisation étant sélectionné au début de chaque opération d'utilisation.

9. Procédé selon l'une quelconque des revendications précédentes, **caractérisé en ce que** les montants disponibles sont limités.

10. Procédé selon l'une quelconque des revendications précédentes, **caractérisé en ce que** la durée pendant laquelle un identifiant de transaction est associé à un terminal de radiotéléphonie mobile dans l'unité centrale d'ordinateur est limitée.

11. Procédé selon l'une quelconque des revendications précédentes, **caractérisé en ce que** l'utilisateur détermine le niveau de sécurité d'une transaction par une sélection de critères de sécurité.
